(19) Europäisches Patentamt

European Patent Office

Office européen des brevets

(11) **EP 0 964 531 A1**

(12) **EUROPEAN PATENT APPLICATION**

(43) Date of publication:
**15.12.1999 Bulletin 1999/50**

(51) Int. Cl.⁶: **H04B 7/185**

(21) Application number: **98304655.8**

(22) Date of filing: **12.06.1998**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **ICO Services Ltd.
London W6 9BN (GB)**

(72) Inventors:
• **Grayson, Mark
Chiswick, London, W4 2QT (GB)**

• **Mullins, Dennis Roy
Sancroft Street, London, SE11 5UL (GB)**
• **Hungerford, Keith Norman Guy
Balmain, NSW 2041 (AU)**

(74) Representative:
**Read, Matthew Charles et al
Venner Shipley & Co.
20 Little Britain
London EC1A 7DH (GB)**

(54) **Cell selection in a mobile satellite system using time delay and Doppler shifts to determine the position of the user**

(57) A cellular satellite mobile telephone system operates with a TDMA frame structure which requires Z-arc path delay and frequency offsets to achieve correct frame timing and frequency synchronisation. Timing Z-arcs are contours of constant path delay on the Earth's surface for signals from an orbiting satellite (3a, 3b) and can be used as reference points for defining a cell. Selection of the correct cell for a mobile user terminal (4a, 4b) seeking to access the system is based on the position of the terminal with respect to a particular Z-arc within a cell, to ensure that allocation of radio resources to user terminals will not violate the TDMA timing constraints. Frequency Z-arcs can be used in a similar way as reference points to define a cell.

163 SPOT BEAMS COVERING DOWN TO 0 DEG ELEVATION

Figure 2

EP 0 964 531 A1

**Description**

The present invention relates to a method of controlling the allocation of radio resources to a mobile user terminal in a cellular satellite mobile telephone system.

Mobile telecommunication systems have been proposed that use satellite communication links between mobile user terminals and conventional terrestrial networks. One network known as the IRIDIUM™ satellite cellular system and described in, for example, EP-A-0 365 885 and US Patent No. 5 394 561 (Motorola), makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed, with an orbital radius in the range of 10-20,000 km; reference is directed to Walker J.G. "Satellite Patterns for Continuous Multiple Whole Earth Coverage" Royal Aircraft Establishment, pp 119-122 (1977). Reference is further directed to the ICO™ satellite cellular system described, for example, in GB-A-2 295 296, and to the ODYSSEY™ satellite cellular system described in EP-A-0 510 789. With these systems, the satellite communication link does not permit communication between adjacent satellites. Instead, a signal from a mobile user terminal such as a mobile handset is directed firstly to the satellite and then to a ground station or satellite access node (SAN), which is connected to a conventional land-based telephone network. This has the advantage that many components of the system are compatible with known digital terrestrial cellular technology such as GSM. Also, simpler satellite communication techniques can be used than with a LEO network.

A cellular mobile communication system which allows random access by mobile user terminals needs to include a specification of how a terminal should select a particular cell for access. The choice of cell is important since time, frequency and interference constraints may mean that support of a dedicated radio resource is not possible if the terminal has not selected the most appropriate cell.

Conventional cell selection techniques use power measurements to determine the optimum cell for access. Typically, this involves selecting the best cell by using a ranking of received signal strengths on a beacon frequency of each cell, possibly offset using broadcast information related to the power transmitted from the base station. In terrestrial cellular systems, a 35 kilometre radius around a base station can typically be accommodated. Terminals which are outside this area cannot be supported.

The conventional techniques work well for terrestrial systems, since the signal attenuates as the user moves away from the base station, following an inverse third to fourth power law. Power levels can therefore be accurately calibrated. However, in a satellite system, coverage is determined by mapping the coverage pattern of a satellite beam defining a cell to the surface of the earth. Because power needs to be conserved, the power profile should ideally be flat, falling off rapidly at the edge of the beam. However, due to the limitations of antenna design, 3dB points are typically used to define the edge of a beam. Hence, when compared with a terrestrial cellular system, there will be relatively small variations of signal strength across a beam. In addition, the calibration of equipment in a satellite system is more difficult than that in a terrestrial cellular system.

The above problems contribute to the fact that a mobile user terminal using received signal strength to determine the optimum cell for access in a satellite cellular system will frequently select a cell through which communications are not supportable.

The present invention aims to improve the cell selection process.

In accordance with the invention, there is provided a method of controlling the allocation of radio resources to a mobile user terminal in a cellular satellite mobile telephone system, the system including a satellite providing a plurality of cells, comprising determining whether the difference between a position of the user terminal on the Earth's surface and a predetermined position associated with a given cell falls within predetermined limits, and controlling the allocation of radio resources to the user terminal in dependence thereon.

The allocation of radio resources may be controlled by deciding whether to allocate or deny radio resources associated with the given cell to the user terminal.

The predetermined position may be defined by reference to a characteristic associated with a signal from the satellite providing the cell, such as a path delay or a frequency shift or other effect experienced by the signal as a result of the position or velocity of the satellite.

More particularly, the characteristic may be a path delay for a signal from the satellite providing the cell to a point on the Earth's surface within the cell. A plurality of such positions for which the signal has a constant path delay to the satellite may together define a Z-arc.

Alternatively, or in addition, the characteristic may be a Doppler shift in the frequency of a signal from the satellite providing the cell to a point on the Earth's surface within the cell. A plurality of such positions for which the signal frequency has a constant Doppler shift may together define a frequency Z-arc.

According to the present invention, there is further provided a method of allocating radio resources to a mobile user terminal in a satellite mobile telephone system, the system including a satellite providing a plurality of cells having radio resources available to provide communications coverage over a region of the Earth's surface, comprising determining whether the user terminal lies within the limits of a given cell, wherein said limits are predefined by reference to a predetermined position within the cell.

The present invention also provides a method of cell selection for a mobile user terminal in a cellular satellite mobile telephone system, comprising: selecting a cell for use by the user terminal in dependence on a comparison of a position of the user terminal in relation to a predetermined position within a given cell.

In accordance with the invention, there is also provided a satellite mobile telephone system comprising a plurality of satellites, each providing a plurality of cells having radio resources available to provide communications coverage via a user terminal over a region of the Earth's surface, the system comprising: means for determining whether the difference in the position of the user terminal on the Earth's surface and a predetermined position within a given cell lies within predetermined limits; and means responsive to said determination to control the allocation of radio resources to the user terminal.

Embodiments of the present invention will now be described, by way of example, with reference to the accompanying drawings, in which:

> Figure 1 is a schematic diagram of the physical components of a satellite mobile telephone system;
> Figure 2 shows the satellite beam pattern in the ICO™ satellite mobile telephone system;
> Figure 3 is a more detailed diagram of the different types of spot beam in the beam pattern of Figure 2;
> Figure 4 shows a mobile user terminal partially cut away;
> Figure 5 is a more detailed block diagram of a SAN and the NMC of Figure 1;
> Figure 6 shows the general principle of the TDMA based communication system used in the ICO™ satellite mobile telephone system;
> Figure 7 shows the position of the Z-arcs and delay classes in relation to the beam types;
> Figure 8 shows details of the TDMA frame structure at the user terminals;
> Figure 9 is a schematic representation of part of a satellite beam pattern in a cellular satellite mobile telephone system;
> Figure 10 is a schematic representation of the overlap between two beams illustrating the position of their respective Z-arcs and corresponding delay classes; and
> Figure 11 illustrates the concept of delay/Doppler position location of a user terminal.

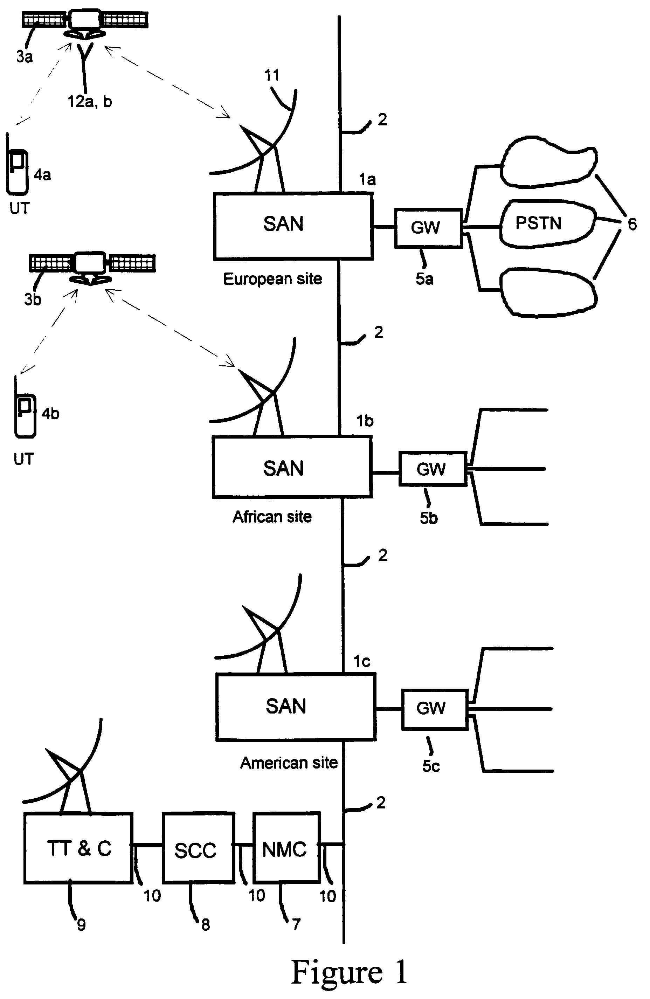

Referring to Figure 1, a satellite mobile telephone system comprises a plurality of satellite access nodes (SAN) 1a, 1b, 1c interconnected by a high capacity digital network 2 ("the backbone network"), a plurality of satellites 3a, 3b, a plurality of user terminals (UT) 4a, 4b, gateways (GW) 5a, 5b, 5c providing connections between the SANs 1a, 1b, 1c and other networks 6, a network management centre (NMC) 7, a satellite control centre (SCC) 8 and a tracking, telemetry and control station (TT&C) 9. The NMC 7, the SCC 8 and the TT&C 9 are interconnected by a lower capacity digital network 10 which is also connected to the backbone network 2. The other networks 6 comprise the public switched telephone network (PSTN), terrestrial cellular telephone networks and the like.

The SCC 8 and the TT&C 9 control the operation of the satellites 3a, 3b, for instance setting transmit power levels and transponder input tuning, as directed by the NMC 7. Telemetry signals from the satellites 3a, 3b are received by the TT&C 9 and processed by the SCC 8 to ensure that the satellites 3a, 3b are functioning correctly.

During a telephone call, a UT 4a, 4b communicates with SAN 1a, 1b via the satellites 3a, 3b using a TDMA scheme over a link comprising a downlink channel and an uplink channel. The channels comprise TDMA time slots on frequencies allocated on initiation of the call or re-allocated during a call.

The satellite network is designed to provide worldwide coverage, so the satellites 3a, 3b form part of a constellation of satellites, which may be arranged in several orbits. In one example, two orbits of five satellites are used, which can be shown to provide coverage of a major pan of the surface of the earth, in which for a 10° satellite elevation angle, one satellite can be accessed by a UT all of the time and two satellites can be accessed for at least 80% of the time, thereby providing system diversity. Further satellites may be included in the constellation in order to provide additional redundancy and diversity.

The satellites are typically arranged in a medium earth orbit (MEO) constellation, for example with an orbital radius of 10,355 km, although the invention is not restricted to a particular orbital radius. In this embodiment, satellites 3a, 3b are shown in a common orbit and are tracked by the antenna arrangement 11 of each SAN 1a, 1b, 1c. Typically, each SAN includes four antennas for tracking individual satellites of the constellation, with one spare antenna. The SANs are spaced around the earth in order to provide continuous coverage. In the embodiment shown, SAN 1a may be located in Europe whereas SAN 1b may be located in Africa, SAN 1c in America and other SANs may be located elsewhere. In Figure 1, the SAN 1b is shown communicating with UT 4b via satellite 3b. For further details of the satellite network, reference is directed to GB-A-2 295 296.

The satellites 3a, 3b are in non-geostationary orbits and comprise generally conventional satellites, such as the known Hughes HS601 model, which have a plurality of satellite transponders including forward and return link communications transponders 12a, 12b, and which may further include features as disclosed in GB-A-2 288 913. Each satellite 3a, 3b is arranged to generate an array of beams, one for each cell, covering a footprint beneath the satellite, each beam including a number of different frequency channels and time slots.

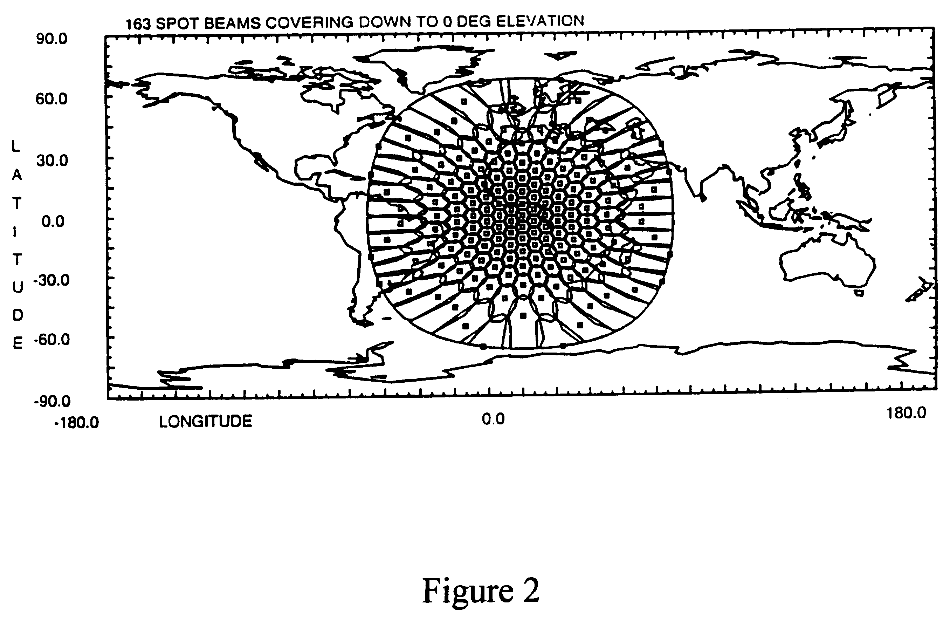

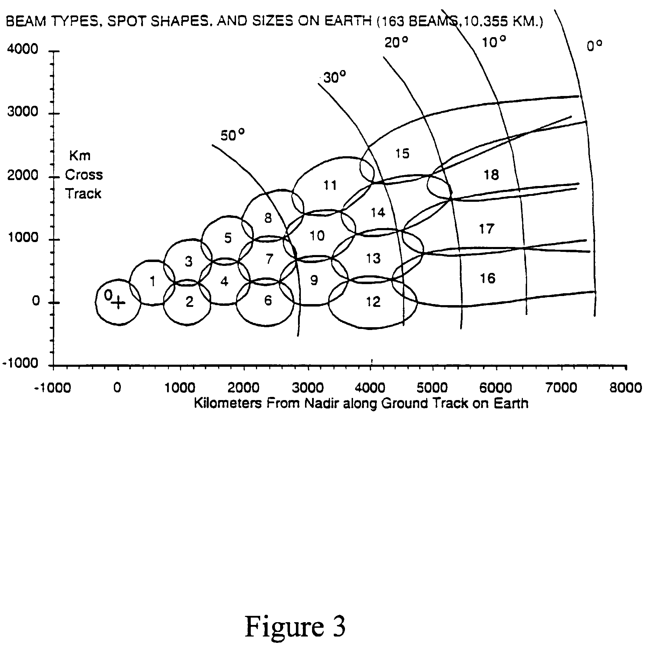

Referring to Figure 2, in the ICO™ satellite mobile telephone system, each satellite 3a, 3b produces a fixed pattern of 163 spot beams, with the shapes of the spot beams varying as a result of the curvature of the earth to produce 19 different beam types (0 - 18), as shown in Figure 3.

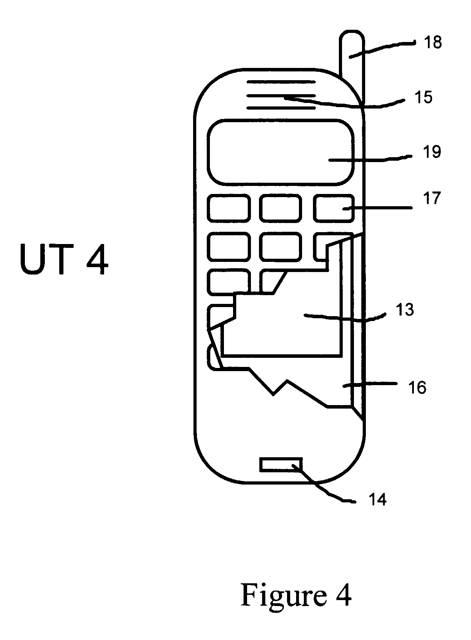

A UT 4a, 4b is shown in more detail in Figure 4 and is generally similar to the units presently available for GSM networks. It comprises a codec (not shown), a controller 13, a microphone 14, a loudspeaker 15, a battery 16, a keypad 17, a radio frequency interface (not shown), an antenna 18, a display 19 and a subscriber identification module (SIM) smart card (not shown).

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The controller 13 comprises a microprocessor and RAM and ROM memory. The microprocessor operates in accordance with a control program stored in the ROM memory. The controller can exchange control and telemetry data with a SAN 1a, b, c using the radio frequency interface.

The SIM includes a processor and a non-volatile memory which stores data identifying the subscriber and data for use in encrypted communication, as well as information relating to system operation, for example, a set of system reference frequencies.

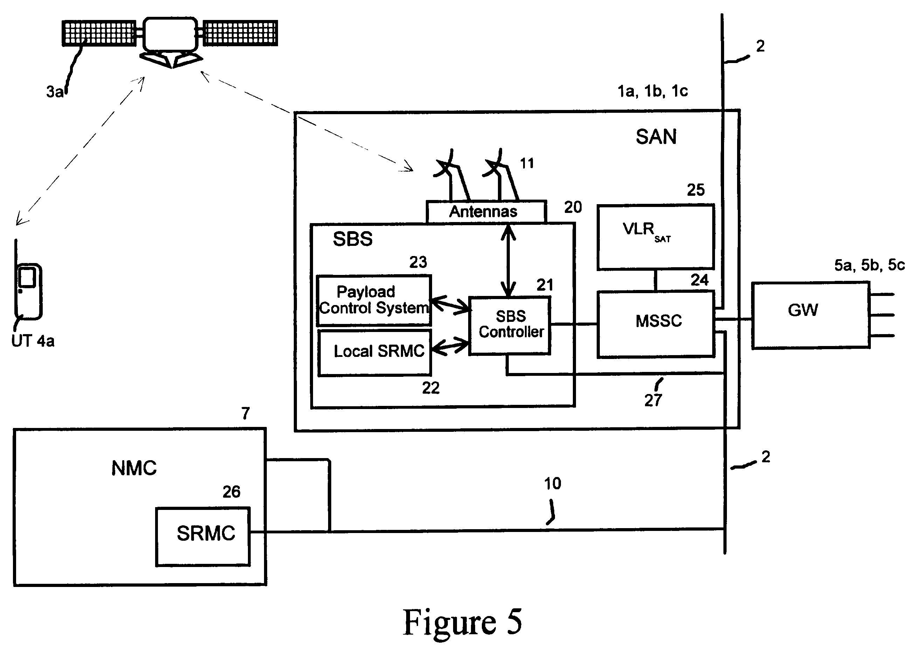

Referring to Figure 5, the configuration of a SAN 1a, 1b, 1c and the NMC 7 is shown in more detail. Each SAN 1a, 1b, 1c consists of a satellite base station SBS 20 which is coupled to the plurality of dish antennas 11 for tracking the satellites 3a, 3b. The SBS 20 comprises an SBS Controller 21 which controls the antennas 11 and which is coupled to a Local Satellite Resource Management Centre (Local SRMC) 22. In some SBSs, the SBS 20 is also coupled to a Payload Control System (PCS) 23. Typically a PCS 23 exists in half of the SBSs in a system. A mobile satellite switching centre MSSC 24 is coupled to the SBS 20 and to a satellite visitor location register VLR$_{SAT}$ 25, which maintains a record of the individual UTs 4a, 4b which are making use of the particular SBS 20. The MSSC 24 provides similar functionality to terrestrial cellular mobile switching centres in managing and controlling the routing of calls between the UT 4a, 4b and the terrestrial networks 6.

The NMC 7 includes a Satellite Resource Management Centre (SRMC) 26, which is connected to each SBS Controller 21 via a connection 27 from the backbone network 2. The SRMC 26 located at the NMC 7, and the Local SRMCs 22 and PCSs 23 located at certain SBSs, together form part of the Satellite Resource Management System (SRMS), whose functions include the generation of frequency plans for the overall satellite constellation, and managing the sharing of satellite resources among the various SBSs so as to optimise the use of the available spectrum in accordance with the instantaneous demand of all SBSs.

The SRMC 26 centrally plans, in non-real time, how the frequency, TDMA time slot and satellite power resources should be managed for optimum efficiency, based on the predicted traffic demands of the various SBSs. It analyses historical traffic data together with satellite ephemeris data, available frequencies and so on, to generate frequency plans to enable the overall satellite constellation to meet expected traffic requirements, as well as generating satellite transponder configuration plans to match the frequency plans. The SRMC 26 further determines how time slots on the planned frequencies are to be shared between the Local SRMCs 22 at each SBS. The resulting plans are known as Burst Time Frequency Plans (BTFPs) and contain pools of available TDMA time slots and frequencies.

The BTFPs are communicated to each Local SRMC 22 at each SBS 20 in non-real time. Real-time time slot allocations are then made by the Local SRMC 22 at each SBS 20 from its local pool, for use by each satellite spot beam, in response to requests from the SBS Controller 21.

The transponder configuration plans for each satellite are communicated to one nominated PCS 23 at an SBS 20 in the coverage of each satellite, from where they are uploaded to the relevant satellites.

The various functions of the SRMS system occur at very different timescales; some functions, such as the on-demand allocation of time slots, occur in real-time, in response to requests from each SBS. Other functions are best performed typically once a day, for example, the global frequency planning or the control of the satellite transponder configurations, as they require extensive information exchange between distant elements of the system.

In normal operation at low traffic levels, a UT 4a, 4b which requests the opening of a traffic channel, which is used to carry most types of voice and data traffic, is allocated appropriate radio resources by the relevant SBS 20 from its local resource pool. These resources include a specified beam on the satellite, frequency and TDMA time slot allocations, an appropriate power level for the service, together with a parameter known as a Z-arc. These resources are managed as appropriate, with, for example, provision for handover procedures to maintain the communications link when movement by the user and/or the satellites requires a different time slot, frequency, beam, Z-arc, satellite or ground station to maintain the link. The requirement for the Z-arc parameter results from the TDMA frame structure, and is explained in detail below.

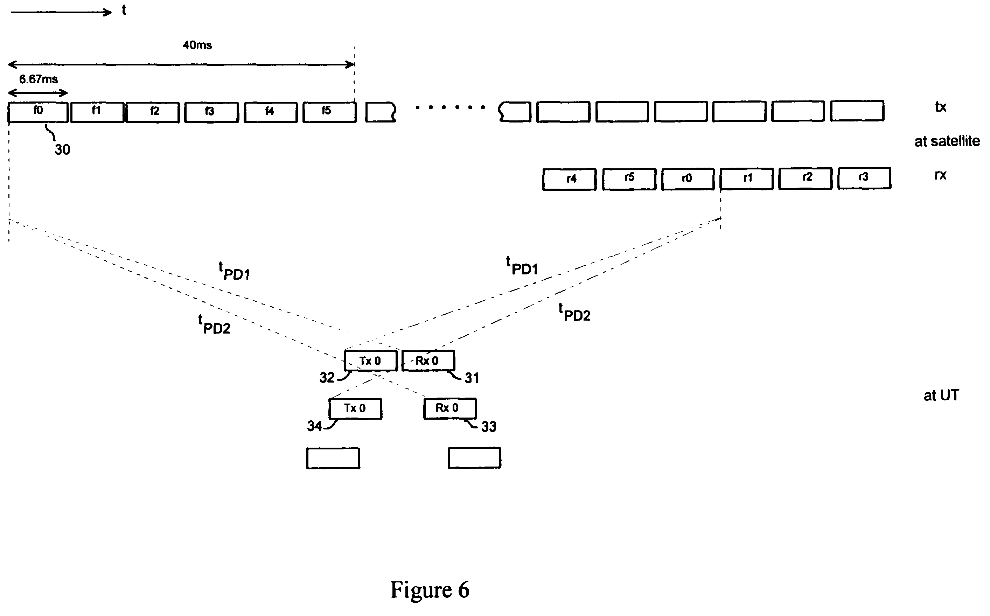

Referring to Figure 6, viewed from a satellite 3a, 3b, a traffic channel is made up of a plurality of TDMA frames, each frame comprising six time slots and lasting for 40 ms. Each time slot lasts 6.67 ms. The return path time slots r0, ..., r5 are shifted relative to the forward path time slots f0, ..., f5. The degree by which they are shifted varies in relation to the distance from the satellite nadir and the cell to which a beam is directed because of the different propagation times.

In a terrestrial cellular mobile telephone network, the signal typically takes a few microseconds to travel from a base transmitter site antenna to a mobile station and any variations are generally insignificant. Consequently, the TDMA time slot pattern is retained at the mobile station.

However, in a satellite mobile telephone system with the satellites 3a, 3b in a medium earth orbit, for example at 10 355km, the time taken for signals to travel between a satellite 3a, 3b and a UT 4a, 4b is longer than a time slot. In the case of a satellite orbiting at 10 355km, the one way propagation time to the nadir is approximately 34.5 ms, which is comparable with the frame duration. This situation is further complicated by there being a significant difference between the path length to the cell at the satellite's nadir and the path lengths to the cells at the edge of the satellite's footprint. For a satellite orbiting at 10 355km, the one way propagation time to a UT which sees the satellite at 0° elevation is approximately 51.6 ms. This leads to significant differences in the times at which bursts arrive at UTs and in the times when UTs are required to transmit in order for their signals to fit in with the TDMA frame structure at the satellite.

For example, a transmission burst (Tx) 30 for TDMA slot 0 at the satellite is received as Rx burst 31 by a UT 4a at a time $t_{PD1}$ later, where $t_{PD1}$ is the one-way path delay from the satellite antenna to the UT antenna. A corresponding Tx burst 32 at the UT 4a is also received at the satellite at a time $t_{PD1}$ later. If the UT 4a moves further from the satellite nadir, then the path delay $t_{PD2}$ is greater than $t_{PD1}$, so that the Rx burst 33 will be received correspondingly later relative to Rx burst 31. In order for the corresponding Tx burst 34 to reach the satellite at the same time as burst 32, it must be transmitted correspondingly earlier than burst 32 by a time $t_{offset}$, such that:

$$t_{PD2} - t_{offset} = t_{PD1}.$$

It is evident from Figure 6 that the variation in path delays gives rise to a pyramid structure of time slots at the UT. The magnitude of the variation in path delay which results from the size of each satellite's footprint means that an uncorrected pyramid structure could result in burst overlap at the UT, as well as the inability to achieve timing synchronisation at the satellite. Although in principle forward and return links could simply transmit at nominal frequency and time, with demodulators on the links searching for and locking to signals as received, such an approach would waste both spectrum and information. Maximum efficiency in the use of the mobile spectrum requires that all forward and return link traffic channel signals in one spot beam must be nominally synchronised in timing and carrier frequency at the satellite. In relation to timing synchronisation, this means that offsets due to path delay variations on links to individual UTs need to be eliminated.

The necessary synchronisation is achieved by referencing the burst timing to one of a number of specific path delay values in each spot beam at which there is zero offset from the traffic channel frame time on Earth. Since contours of constant time delay on Earth are arc-shaped, the zero-offset arcs are known as Z-arcs.

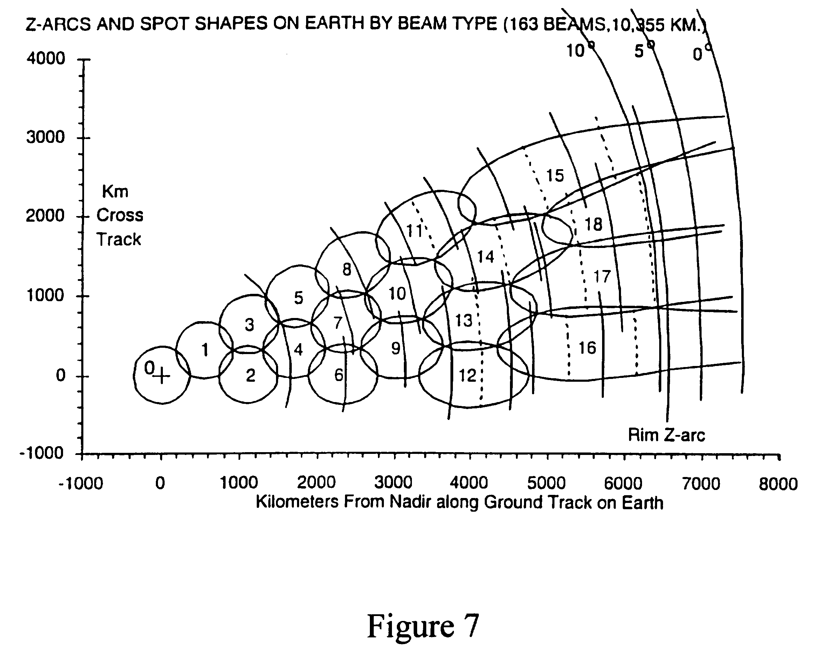

In the ICO™ satellite mobile telephone system, each Z-arc delay value defines a delay class which lies within +/- 1.4 ms of that value, so that 17 delay classes cover the 163 spot beams. Figure 7 shows the Z-arcs superimposed onto the beam types shown in Figure 2. Beam types 0 to 5, for example, have a path delay variation of only 2.2 ms, and are therefore covered by a single Z-arc. In beam spots with more than one delay class, dotted arcs show the boundaries between delay classes.

The TDMA frame structure is also specified by the need to minimise the mass and cost of the UTs 4a, 4b, with a radio link design which permits a UT to operate half-duplex on the RF link ie. with non-overlapping transmit and receive burst timings and a small guard time, for example 0.533 ms, for transmit-receive switching and local oscillator re-tuning. Further, to allow implementation of diversity, the UTs are capable of transmitting two 6.667 ms TDMA bursts and receiving two 6.667 ms TDMA bursts in each 40 ms frame period.

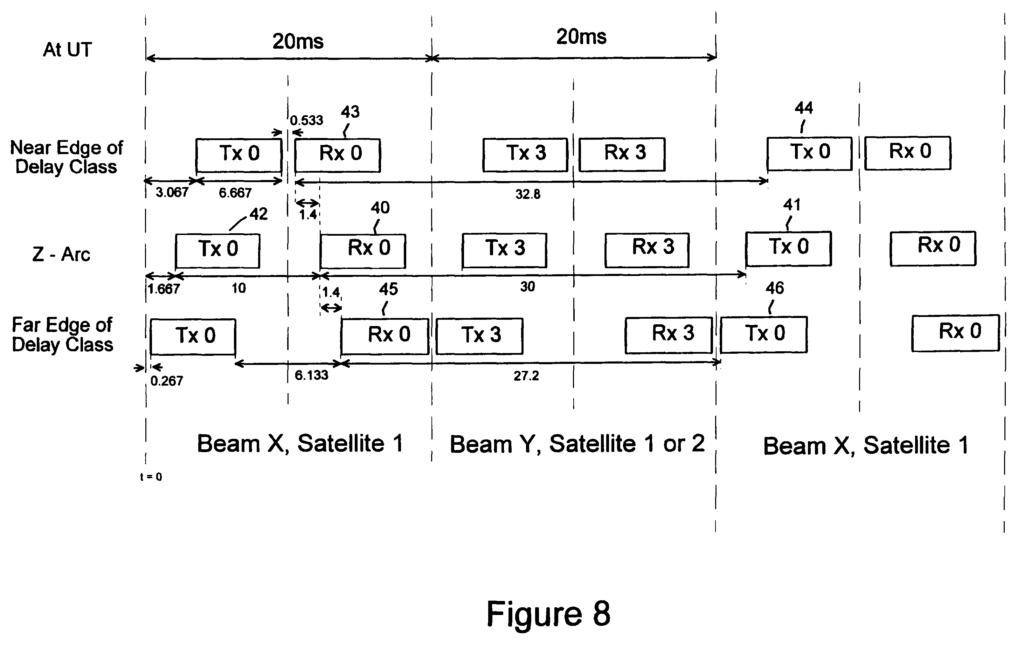

Figure 8 shows the frame structure at a UT 4a, 4b for an arbitrary delay class. The requirements of half-duplex operation, diversity and close time synchronisation at the satellite can all be met if the transmit burst for TDMA slot N (N = 0 to 5) follows the receive burst for TDMA slot N by 4.5 slots (30 ms). Each 40 ms frame is made up of two 20 ms diversity windows. The burst timings at the Earth and the satellite are explained relative to the frame timing on Earth to which they are referenced.

Figure 8 illustrates that the transmit and receive bursts remain at least 0.267 ms inside the 20 ms diversity window and retain at least a 0.533 ms separation from each other, even when the UT moves away from the Z-arc, so that, within each delay class, the one-way path delay varies up to +/- 1.4 ms from the Z-arc value.

On the Z-arc, Rx burst 40 is received 11.667 ms after the start of the window and corresponds to a Tx burst initiated at the satellite at 11.667 - $PD_{MID}$, where $PD_{MID}$ is the Z-arc value ie. the path delay from the satellite to a UT located at the Z-arc. In response to the Rx burst 40, a Tx burst 41 is initiated 4.5 slots (30 ms) later. Since slot timing is modulo 40 ms, this is equivalent to the receive burst following the transmit burst by 1.5 slots (10 ms), which explains the existence of Tx burst 42 within the same diversity window as Rx burst 40. However, operationally, transmit must follow receive because time and frequency references come from the receive burst. Tx burst 42 is received at the satellite at a time 1.667 + $PD_{MID}$.

Considering the situation where the UT lies on the near edge of the delay class, namely the edge nearer the nadir, the Rx burst 43 is received 1.4 ms before Rx burst 40. To ensure that the corresponding Tx burst 44 arrives at the satellite at the same time as Tx burst 41, Tx burst 44 is sent 32.8 ms after Rx burst 43. This represents a delay of 4.5 slots plus a correction of 2.8 ms (2 * 1.4 ms) to compensate for the shorter two-way path delay.

Similarly, where the UT lies on the far edge of the delay class, Rx burst 45 is received 1.4 ms after Rx burst 40. The corresponding Tx burst 46 is therefore sent 27.2 ms later, being 4.5 slots less a correction of 2.8 ms to compensate for the longer two-way path delay.

Where the UT lies in any other position within the delay class, the appropriate offset for Tx burst timing can be obtained by calculating the difference between the actual path delay to the UT and the known Z-arc value representing the delay class to which the UT is allocated. The UT merely adds or subtracts twice this difference (for the two-way path delay) from the basic 4.5 slot (30 ms) delay after the Tx burst is received.

Conveniently, this offset, which has a maximum value of +/- 2.8 ms, can be calculated by the SBS 20 and periodically sent to the UT 4a, 4b. The SBS 20 knows the Z-arc value corresponding to the delay class to which the UT 4a, 4b has been allocated. It can determine its own delay to a satellite 3a, 3b by sending and receiving loop-back transmissions. Other delays within the system can be measured or details obtained from the relevant equipment manufacturer, for example, in the case of transponder delays, from the satellite manufacturer, and this information supplied to the SBS 20. Since the SBS 20 knows the various offsets applied by the UT between the Rx and Tx burst, it can then use a received burst from the UT to calculate the actual path delay to the UT.

Since time slot 3 in the TDMA structure occurs 20 ms after slot 0, it can be seen that the slot 3 Tx and Rx bursts fit within a 20 ms diversity window contiguous with the first window. The same UT can therefore simultaneously use TDMA slot 3 for a diversity link via a second spot beam, either via the same satellite for make-before-break beam handover, or via a second satellite.

Similar frame structures can be produced for paired slots 1 and 4, and 2 and 5, which are delayed from slot 0 by the appropriate multiple of slot length.

The way in which an appropriate traffic channel is allocated to a UT is described below.

Before initiating radio access, a UT 4a, 4b seeks to acquire system time and frequency from a high power Control Channel (Broadcast Control Channel - BCCH) carrying Broadcast Network information. The BCCH channel is transmitted using a different carrier frequency to the traffic channels and operates at, for example, +4.5 dB compared to the nominal power for a traffic channel. Acquisition involves using, for example, power-profile analysis on the BCCH signal.

To initiate radio access, the UT 4a transmits a formatted burst in a prescribed time slot on a prescribed random access channel (RACH) carrier frequency. There are RACH frequencies in every spot beam of every satellite. The relevant SBS searches for and acquires the UT RACH burst timing.

Assuming that the UT 4a is correctly located within a cell, namely within 1.4ms of a cell Z-arc, the SBS Controller 21 requests resources for the UT from the local resource pool maintained by its Local SRMC 22. The assignment of a traffic channel is then sent to the UT on an access grant channel (AGCH).

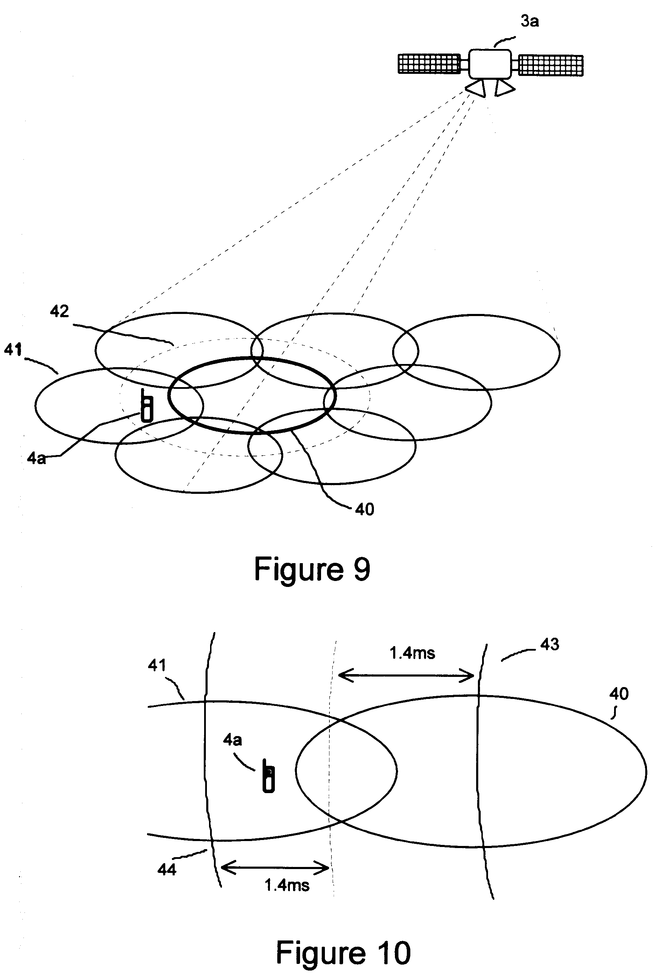

However, referring to Figure 9, it is evident that the BCCH channel acquired may not be the correct one to enable the UT to access the system. The power profile across a given cell 40 falls off only slowly at the edge of the cell, so that the broadcast power at a further cell periphery 42 may not have significantly declined. It is therefore entirely feasible that a UT 4a lying within a cell 41 will erroneously acquire the BCCH signal from the cell 40 because it also lies within the periphery 42 of the cell 40.

Referring to the enlarged view shown in Figure 10, in that position, the UT 4a is more than 1.4ms from the Z-arc 43 of the cell 40. The TDMA timing structure set out in Figure 8 cannot therefore support communications for the UT 4a via the cell 40.

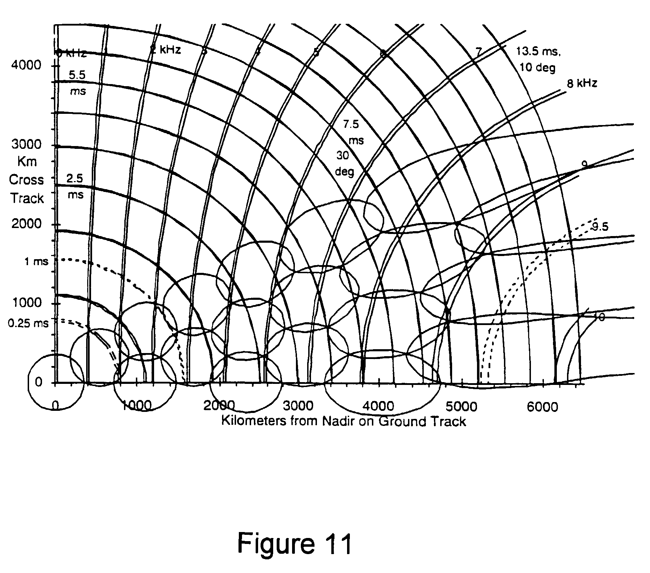

To ensure that this does not occur, the SBS 20 determines the position of the UT 4a using conventional time and frequency measurements. For example, Figure 11 shows the concept of delay/Doppler position location. Constant Doppler contours on Earth are shown at 1kHz intervals and constant path delay contours at 1ms intervals superimposed onto a beam pattern. The intersection of two contours determines UT position. All the contours are double lines, separated by representative errors of + /-10μs delay and +/-30Hz Doppler error. There is a high probability that the position of the UT lies inside the parallelogram at the #-shaped double-contour intersections. Although delay/Doppler data alone gives ambiguous UT positions within all four quadrants, only one of which is shown in Figure 10, the true position can be resolved by knowing which beam the UT is in or is apparently in. Alternatively, the UT position can be determined on the basis of received signal delays via two or more satellites or on the basis of the Doppler shifts in signals received via a plurality of satellites.

As explained above, the SBS 20 can work out the actual path delay between the satellite and the UT by knowing the received RACH time and various fixed offsets. The SBS 20 can then determine the difference between the satellite-UT delay and the delay to the Z-arc in the selected cell, or to the nearest Z-arc if the cell has more than one. If this difference exceeds the maximum permissible figure of 1.4ms, then the UT cannot be supported via a dedicated radio resource in the cell it has selected for access and the SBS 20 can prevent access by the UT through cell 40, by refusing to assign a traffic channel to the UT on the AGCH channel, instead sending a message indicating that the UT is outside the cell limits.

Similarly, the SBS 20 can use the calculated position of the terminal and knowledge of the Z-arc positions and velocities to predict when it will be able to allocate dedicated resources in the cell 40 to the UT. This calculated time can be sent to the UT on the AGCH channel. The UT then cannot access the system through the cell 40 for that time, although this does not preclude the UT from accessing the system through another cell which may have a lower received signal strength. Effectively the cell 40 is temporarily barred for access.

To enable the UT to access the system through another cell, the SBS 20 carries out comparisons of the actual time delay to the UT with respect to other cells, for example cell 41. On this basis, the SBS 20 may determine that the UT lies within the delay class based on the Z-arc 44. The UT can then be notified by SBS 20 through an AGCH channel that access is possible via cell 41.

Once the UT is correctly located within an appropriate delay class, then during the traffic exchange, the SBS 20 pre-corrects the forward-link frame timing of the Tx bursts at the satellite to achieve zero frame timing offset on Earth along the Z-arc. The UT locks to the corresponding received Rx burst timing and pre-corrects and transmits its return-link Tx burst 4.5 slots +/- up to 2.8 ms later so as to maintain nominally zero timing at the satellite. The SBS 20 periodically, for example, once per minute, sends new timing offsets to the UT, based on continuing measurement of return-link burst timing.

When the UT reaches the edge of a delay class, it is notified by the SBS to hand over to a new delay class. Referring to Figure 7, in central beams a UT can remain in the same delay class through seven beam handovers, while in edge beams a UT can remain in the same beam for three delay-class handovers.

While the invention has been described with reference to TDMA timing constraints and timing Z-arcs, different or additional constraints may also need to be met to ensure that the correct cell to be used by the UT can be identified. For example, a constraint also exists in the frequency domain with regard to compensating for Doppler effects. As with timing Z-arcs, frequency pre-corrections are referenced to a plurality of frequency Z-arcs, each of which define a zero-offset on Earth from a predetermined nominal signal Doppler shift at the frequency Z-arc. In the ICO™ system, the maximum differential Doppler shift from the nominal value at a frequency Z-arc is +/- 1.1 kHz.

For example, in determining whether a UT can be supported via a dedicated radio resource in the cell it has selected for access, the SBS 20 calculates both delay and Doppler shift values for the UT, which define the position of the UT, and then determines whether the timing and frequency Z-arcs lie within 1.4 ms and 1.1 kHz respectively of the calculated values. Radio resources will be allocated to the UT via the selected cell only if both these constraints are met.

It will be understood that as well as signal time delays and frequency shifts, other characteristics associated with the signal from the satellite, including for example phase relationships, can be used to define the limits of a cell on the surface of the Earth.

## Claims

1.  A method of controlling the allocation of radio resources to a mobile user terminal in a cellular satellite mobile telephone system, the system including a satellite providing a plurality of cells, comprising determining whether the difference between a position of the user terminal on the Earth's surface and a predetermined position associated with a given cell falls within predetermined limits, and controlling the allocation of radio resources to the user terminal in dependence thereon.

2.  A method according to claim 1, wherein the allocation of resources is controlled by determining whether to allocate or deny radio resources associated with the given cell to the user terminal.

3.  A method according to claim 1 or 2, wherein the predetermined position is defined by reference to a characteristic associated with a signal from the satellite providing the cell.

4.  A method according to claim 3, wherein the characteristic comprises a path delay for a signal from the satellite providing the cell to a point on the Earth's surface within the cell.

5.  A method according to claim 4, further comprising a plurality of predetermined positions within the cell for which the signal has a constant path delay to the satellite, said positions together defining a Z-arc.

6. A method according to claim 4 or 5, comprising determining the position of the user terminal by calculating the path delay of a signal from a given satellite to the user terminal.

7. A method according to any one of claims 3 to 6, wherein the characteristic comprises a Doppler shift in the frequency of a signal from the satellite providing the cell to a point on the Earth's surface within the cell.

8. A method according to claim 7, further comprising a plurality of predetermined positions within the cell for which the signal frequency has a constant Doppler shift, said positions together defining a frequency Z-arc.

9. A method according to claim 7 or 8, comprising determining the position of the user terminal by calculating the Doppler shift in the frequency of a signal from a given satellite to the user terminal.

10. A method according to any one of the preceding claims, including denying radio resources from the given cell to the user terminal when the positional difference is outside the predetermined limits so as to bar the user terminal's access to the cell.

11. A method according to claim 10, comprising predicting when radio resources in the barred cell will be available to the user terminal in dependence on movement of one or both of the user terminal and the satellite.

12. A method according to any one of claims 1 to 9, including allocating radio resources from the given cell to the user terminal when the positional difference is within the predetermined limits.

13. A method according to any one of the preceding claims, wherein the predetermined limits include a maximum delay value for the difference between a first path delay for a signal from the satellite to the user terminal and a second predetermined path delay for a signal from the satellite to a predetermined point within the cell.

14. A method according to claim 13, wherein the maximum delay value is plus or minus 1.4 milliseconds.

15. A method according to any one of the preceding claims, wherein the predetermined limits include a maximum Doppler shift value for the difference between a first Doppler shift in the frequency of a signal from the satellite to the user terminal and a second predetermined Doppler shift in the frequency of a signal from the satellite to a predetermined point within the cell.

16. A method according to claim 15, wherein the maximum Doppler shift value is plus or minus 1.1 kHz.

17. A method according to any one of the preceding claims, including performing the determination as to the positional difference for each of a plurality of cells so as to determine the cell through which radio resources are to be provided to the user terminal.

18. A method according to claim 17, including allocating radio resources to a user terminal in a cell neighbouring a cell through which resources have been denied.

19. A method according to claim 17 or 18, wherein the plurality of cells include cells from a plurality of satellites.

20. A method according to any one of the preceding claims wherein radio resources are allocated through a cell with the smallest positional difference between the user terminal and the predetermined position within the cell.

21. A method according to any one of the preceding claims, wherein the satellite mobile telephone system uses a TDMA multiple access protocol, and the predetermined limits are dependent on the timing constraints imposed by said protocol.

22. A method according to any one of the preceding claims, wherein the predetermined limits are dependent on the frequency constraints imposed by Doppler effects.

23. A method according to any one of the preceding claims, further comprising determining the position of the user terminal on the Earth's surface.

24. A method of allocating radio resources to a mobile user terminal in a cellular satellite mobile telephone system, the system including a satellite providing a plurality of cells, comprising determining whether the user terminal lies within the limits of a given cell, said limits being predefined by reference to a predetermined position within the cell, and in dependence on said determination, determining whether to allocate or deny radio resources associated with the given cell to the user terminal.

25. A method according to claim 24, wherein the predetermined position lies on a Z-arc.

26. A method of cell selection for a mobile user terminal in a cellular satellite mobile telephone system, comprising:

selecting a cell for use by the user terminal in dependence on a comparison of a position of the user terminal in relation to a predetermined position within a given cell.

27. A cellular satellite mobile telephone system comprising a plurality of satellites, each providing a plurality of cells to provide communications coverage via a user terminal over a region of the Earth's surface, the system comprising:

means for determining whether the difference in the position of the user terminal on the Earth's surface and a predetermined position within a given cell lies within predetermined limits;
means responsive to said determination to control the allocation of radio resources to the user terminal.

Figure 1

Figure 2

BEAM TYPES, SPOT SHAPES, AND SIZES ON EARTH (163 BEAMS, 10.355 KM.)

Figure 3

UT 4

Figure 4

Figure 5

Figure 6

Z-ARCS AND SPOT SHAPES ON EARTH BY BEAM TYPE (163 BEAMS,10,355 KM.)

Figure 7

Figure 8

Figure 9

Figure 10

Figure 11

European Patent
Office

**EUROPEAN SEARCH REPORT**

Application Number

EP 98 30 4655

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 845 874 A (TRW) 3 June 1998<br>* claims 1-15; figures 1-7 * | 1-27 | H04B7/185 |
| X | EP 0 828 353 A (ICO) 11 March 1998<br>* page 10, line 33 - line 39; figures 1-17 * | 1-27 | |
| X | EP 0 803 742 A (TRW) 29 October 1997<br>* claims 1-17; figures 1-4 * | 1-27 | |
| X | US 5 552 795 A (MOTOROLA) 3 September 1996<br>* claims 1-19 * | 1-27 | |
| X | US 5 515 062 A (MOTOROLA) 7 May 1996<br>* column 2, line 45 - column 3, line 25; figures 1-8 * | 1-27 | |
| X | US 5 412 389 A (MOTOROLA) 2 May 1995<br>* claims 1-20; figures 1-10 * | 1-27 | |
| X | EP 0 808 034 A (TRW) 19 November 1997<br><br>* column 6, line 56 - column 7, line 20 * | 1,24,26,27 | TECHNICAL FIELDS SEARCHED (Int.Cl.6)<br><br>H04B |

The present search report has been drawn up for all claims

| Place of search | Date of completion of the search | Examiner |
|---|---|---|
| THE HAGUE | 12 October 1998 | Bischof, J-L |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03 82 (P04C01)

**ANNEX TO THE EUROPEAN SEARCH REPORT
ON EUROPEAN PATENT APPLICATION NO.**                    EP 98 30 4655

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-1998

| Patent document cited in search report | | Publication date | Patent family member(s) | | Publication date |
|---|---|---|---|---|---|
| EP 845874 | A | 03-06-1998 | JP | 10229578 A | 25-08-1998 |
| EP 828353 | A | 11-03-1998 | GB | 2317303 A | 18-03-1998 |
| | | | JP | 10164647 A | 19-06-1998 |
| EP 803742 | A | 29-10-1997 | CA | 2202827 A | 25-10-1997 |
| | | | JP | 10048310 A | 20-02-1998 |
| US 5552795 | A | 03-09-1996 | NONE | | |
| US 5515062 | A | 07-05-1996 | NONE | | |
| US 5412389 | A | 02-05-1995 | NONE | | |
| EP 808034 | A | 19-11-1997 | US | 5784695 A | 21-07-1998 |
| | | | JP | 10108267 A | 24-04-1998 |

EPO FORM P0459

For more details about this annex : see Official Journal of the European Patent Office, No. 12/82